(19) Europäisches Patentamt
European Patent Office
Office européen des brevets

(11) Veröffentlichungsnummer: **0 048 374**
**B1**

(12) # EUROPÄISCHE PATENTSCHRIFT

(45) Veröffentlichungstag der Patentschrift: **20.06.84**

(51) Int. Cl.³: **C 08 L 67/02**, C 08 K 5/01, B 29 C 1/04

(21) Anmeldenummer: **81107015.0**

(22) Anmeldetag: **07.09.81**

(54) **Verwendung von hydrierten Polybenzylen als Entformungsmittel für aromatische Polyester.**

(30) Priorität: **18.09.80 DE 3035147**

(43) Veröffentlichungstag der Anmeldung: **31.03.82 Patentblatt 82/13**

(45) Bekanntmachung des Hinweises auf die Patenterteilung: **20.06.84 Patentblatt 84/25**

(84) Benannte Vertragsstaaten: **DE FR GB IT NL**

(56) Entgegenhaltungen:
**DE - A - 2 620 257**

**Patents Abstracts of Japan Band 3, Nr. 59, 19. Mai 1979, Seiten 38C46**
**Patents Abstracts of Japan Band 4, Nr. 89, 25. Juni 1980, Seite 62C16**

***Die Akte enthält technische Angaben, die nach dem Eingang der Anmeldung eingereicht wurden und die nicht in dieser Patentschrift enthalten sind.***

(73) Patentinhaber: **BAYER AG, Konzernverwaltung RP Patentabteilung, D-5090 Leverkusen 1 Bayerwerk (DE)**

(72) Erfinder: **Freitag, Dieter, Dr., Hasenheide 10, D-4150 Krefeld 1 (DE)**
Erfinder: **Reinking, Klaus, Dr., Robert-Stolz-Strasse 16b, D-5632 Wermelskirchen (DE)**
Erfinder: **Tacke, Peter, Dr., Brandenburger Strasse 12, D-4150 Krefeld (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft die Verwendung von teilweise oder vollständig hydrierten Polybenzylen als Entformungsmittel für thermoplastische aromatische Polyester auf Basis von Diphenolen und Iso- und/oder Terephthalsäure.

Aromatische Polyester sind bekannt (W. M. Eareckson, „J. Polym. Sci. XL", 399-406 [1959]; André Conix, „Thermoplastic Polyesters from Bisphenols", Ind. Eng. Chem., Bd. 51, Nr. 2, 147-150, Febr. 1959; FR Nr. 1177517, US Nr. 3351624, DE-AS Nr. 1445384). Sie werden aufgrund ihrer ausgezeichneten Eigenschaften überall dort eingesetzt, wo hohe Wärmeformbeständigkeit und gute Schlag- bzw. Kerbschlagzähigkeit erwünscht sind.

Obwohl die bislang bekannten thermoplastischen aromatischen Polyester viele Anforderungen erfüllen, ist die Fachwelt daran interessiert, die Eigenschaften dieser Polykondensate weiter zu verbessern.

Aus wirtschaftlichen Gründen fordert man bei Spritzgiessverfahren kurze Zykluszeiten, wofür eine gute Entformbarkeit der Formteile Voraussetzung ist – eine Eigenschaft, die insbesondere bei komplizierten Formteilen wichtig ist und die vornehmlich von der Art der Spritzgiessmasse abhängt.

Als Entformungsmittel für thermoplastische aromatische Polyester hat man schon Ester mehrwertiger Alkohole und aliphatischer Carbonsäure ebenso wie Bisfettsäureamide, Esterwachse und Metallseifen (JP-OS Nrn. 74/129747, 75/51152) vorgeschlagen.

Unsere Versuche haben ergeben, dass diese Entformungsmittel des Standes der Technik in verhältnismässig grossen Mengen verwendet werden müssen, so dass die zähelastischen Eigenschaften, die Wärmeformbeständigkeit und die Transparenz der aromatischen Polyester – bei wiederholter thermoplastischer Verarbeitung besonders stark – in unerwünschtem Masse beeinträchtigt werden.

Es wurde nun überraschenderweise gefunden, dass bereits kleine Mengen hydrierter Polybenzyle eine einwandfreie Entformung gewährleisten und die zähelastischen Eigenschaften, die Wärmeformbeständigkeit und die Transparenz der aromatischen Polyester nicht nennenswert beeinträchtigen.

Gegenstand der Erfindung ist also die Verwendung von hydrierten Polybenzylen mit wiederkehrenden Einheiten der Formel

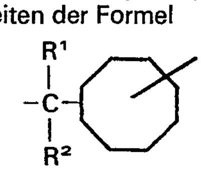

(I)

worin

$R^1$, $R^2$ ein Wasserstoffatom oder einen Alkylrest mit 1 bis 5 C-Atomen bedeuten,

als Entformungsmittel für aromatische Polyester.

Die erfindungsgemäss zu verwendenden hydrierten Polybenzyle enthalten diese wiederkehrende Einheit – durchschnittlich pro Molekül – 3- bis 300mal, vorzugsweise 10- bis 150mal, und haben daher als Zahlenmittel bestimmte Molekulargewichte $\overline{M}_n$ von 300 bis 300000, vorzugsweise von 1000 bis 10000 (bis zu Werten von 7000 dampfdruckosmometrisch, darüber membranosmometrisch in Dichlormethan bestimmt).

Polybenzyle und ihre Herstellung sind bekannt; vgl. z.B. „Methoden der Organischen Chemie" (Houben-Weyl), Bd. 14/2, 607, Georg Thieme Verlag, Stuttgart 1963. Die Hydrierung kann nach an sich bekannten Methoden erfolgen; s. Ullmann's „Encyclopädie der technischen Chemie", Bd. 13, 4. Aufl., 135-147, Verlag Chemie, Weinheim 1977.

Über die Hydrierung der Polybenzyle wird von V.V. Korshak *et al.* in „Izvest. Akad. Nauk S.S.S.R. Otdel. Khim. Nauk" 1955, S. 1090-4 berichtet.

Polybenzyle werden in der Regel durch Friedel-Crafts-Alkylierung von Benzylhalogeniden der Formel

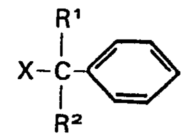

(II)

mit sich selbst hergestellt, wobei

X ein Jod-, vorzugsweise ein Chlor- oder Bromatom bedeutet, und

$R^1$ und $R^2$ die oben angegebene Bedeutung haben.

Die Alkylierung erfolgt im vorliegenden Fall bekanntlich in o- und/oder p-Position, wobei durch Mehrfachalkylierung natürlich auch Verzweigungen entstehen können.

Als Endgruppen kommen insbesondere Phenyl, Tolyl- und Halogenmethylphenylgruppen in Frage.

Die erfindungsgemäss zu verwendenden hydrierten Polybenzyle sind auch dann noch wirksam, wenn sie bis zu 30 Mol-%, bezogen auf die Anzahl carbocyclischer Reste, aromatischer Ringe (die z.B. wegen unvollständiger Hydrierung als solche erhalten geblieben sind) enthalten.

Die erfindungsgemäss zu verwendenden hydrierten Polybenzyle entsprechen im Idealfall der Formel

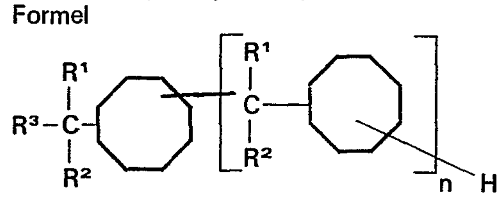

(III)

worin

$R^1$ und $R^2$ die oben angegebene Bedeutung haben,

$R^3$ für X oder ein Wasserstoffatom, und

n für eine Zahl von 3 bis 300 stehen.

Mögliche Verzweigungsstellen sind in Formel III nicht dargestellt.

Die erfindungsgemäss zu verwendenden Entformungsmittel werden im allgemeinen in Mengen von 0,01 bis 3 Gew.-%, vorzugsweise 0,05 bis 1, bezogen auf aromatischen Polyester, eingesetzt.

Aromatische Polyester im Sinne der Erfindung sind thermoplastische Polyester aus aromatischen

Dihydroxiverbindungen und Iso- und/oder Terephthalsäure, Kettenabbrechern und gegebenenfalls Verzweigungsmitteln, wobei bis zu 50 Mol-% der Estergruppen durch Carbonatgruppen ersetzt sein können.

Die aromatischen Polyester besitzen in der Regel relative Lösungsviskositäten von 1,18 bis 2,0, vorzugsweise von 1,2 bis 1,5 (gemessen mit einer Lösung von 0,5 g Substanz in 100 ml $CH_2Cl_2$-Lösung bei 25°C).

Bevorzugte Diphenole für die Herstellung der aromatischen Polyester sind Verbindungen der Formel

$$HO-Z-OH \qquad (IV)$$

worin

Z einen zweiwertigen ein- oder mehrkernigen aromatischen Rest mit 6 bis 30 C-Atomen bedeutet, wobei Z derart gebaut ist, dass die beiden OH-Gruppen direkt an je ein C-Atom eines aromatischen Systems gebunden sind.

Besonders bevorzugte Diphenole sind Verbindungen der Formel

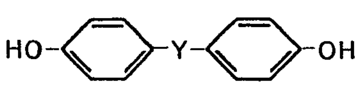 (V)

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen, −O−, −S−,

$\underset{\overset{\|}{O}}{-S-}$, $-SO_2-$, oder $\underset{\overset{\|}{O}}{-C-}$ bedeutet

sowie deren kernalkylierte und kernhalogenierte Derivate, z.B. Hydrochinon, Resorcin, Dihydroxidiphenyle, Bis(hydroxiphenyl)alkane, Bis(hydroxiphenyl)cycloalkane, Bis(hydroxiphenyl)-sulfide, Bis(hydroxiphenyl)ether, Bis(hydroxiphenyl)ketone, Bis(hydroxiphenyl)sulfoxide, Bis(hydroxiphenyl)sulfone und α,α'-Bis(hydroxiphenyl)diisopropylbenzole sowie deren kernalkylierte und kernhalogenierte Verbindungen, insbesondere z.B. Bisphenol A=2,2-Bis-(4-hydroxiphenyl)propan, Tetramethylbisphenol-A, 1,1-Bis-(4-hydroxiphenyl)isobutan, 1,1-Bis-(4-hydroxiphenyl)cyclohexan, 4,4'-Dihydroxidiphenylsulfid, 4,4'-Dihydroxidiphenyl, 4,4'-Dihydroxidiphenylsulfon sowie deren di- und tetrahalogenierte Derivate. Besonders bevorzugt ist Bisphenol-A. Es können auch beliebige Mischungen der vorgenannten Diphenole verwendet werden.

Als Kettenabbrecher für die aromatischen Polyester, deren Entformbarkeit erfindungsgemäss verbessert werden kann, werden vorzugsweise Phenol, Alkylphenole mit $C_1$ bis $C_{12}$-Alkylgruppen, halogenierte Phenole, Hydroxidiphenyl, Naphthole, Chlorkohlensäureester aus solchen phenolischen Verbindungen und Chloride von aromatischen Monocarbonsäuren, die gegebenenfalls durch $C_1$ bis $C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet.

Als Verzweigungsmittel für die aromatischen Polyester, deren Entformbarkeit erfindungsgemäss verbessert werden kann, lassen sich vorzugsweise 3- oder höherfunktionelle Carbonsäurechloride oder 3- und höherwertige Phenole in Mengen von 0,01 bis 1 Mol-%, bezogen auf eingesetzte Dicarbonsäurechloride bzw. auf eingesetzte Diphenole, verwenden.

Ausserdem können die aromatischen Polyester bis zu 10 Mol-% Säureanhydridgruppierungen (bezogen auf die Summe von Carbonester-, Carbonat- und Anhydridgruppierungen) enthalten.

Verfahren zur Herstellung aromatischer Polyester sind bekannt: Sie können aus Diphenolen, Iso- und/oder Terephthalsäure, Kettenabbrechern und gegebenenfalls Verzweigungsmitteln nach dem Umesterungsverfahren oder aus Diphenolen, Iso- und/oder Terephthalsäuredichloriden, Kettenabbrechern und gegebenenfalls Verzweigungsmitteln in der Schmelze, in Lösung oder nach dem Phasengrenzflächenverfahren hergestellt werden; vgl. V.V. Korshak und S.V. Vinogradova, „Polyesters", Pergamon Press, 1965.

Auch der teilweise Ersatz der Ester- durch Carbonatgruppen ist bekannt (G.S. Kolesnikow *et al.*, „J. Polym. Sci. UdSSR", Bd. 9, 1967, S. 1705 bis 1711; US Nrn. 2030331, 3169121, 3409704, DE-OS Nrn. 2714544, 2758030).

Die Einarbeitung der erfindungsgemäss zu verwendenden, normalerweise in Pulverform vorliegenden Entformungsmittel in die aromatischen Polyester kann z.B. durch Auftrudeln auf das Polyestergranulat, anschliessende Homogenisierung im Extruder und erneute Granulierung erfolgen.

Die Entformungsmittel können den Polyestern auch während der Herstellung, beispielsweise vor dem Eindampfen von deren Lösungen, zugesetzt werden.

Schliesslich ist auch das Auftrudeln der pulverförmigen Entformungsmittel auf Granulat und dessen unmittelbare Verarbeitung zu Formkörpern möglich.

Die erfindungsgemäss mit Entformungsmittel ausgerüsteten aromatischen Polyester können Stabilisatoren, Fliessmittel, Weichmacher und Füllstoffe, wie z.B. Glasfasern, Glaskugeln, Asbest- und Kohlenstoffasern, Kieselgur, Kaolin, Gesteinsmehl und Pigmente, enthalten.

Die gemäss der Erfindung verbesserten aromatischen Polyester können nach üblichen Verfahren in Spritzgiessmaschinen zu Formkörpern oder in Extrudern zu Halbzeug verarbeitet werden. Die Formmassen finden überall dort Anwendung, wo Formkörper in grosser Stückzahl mit kurzen Zykluszeiten vollautomatisch nach dem Spritzgiessverfahren hergestellt werden. Das gilt z.B. für die Verwendung auf dem elektrotechnischen und optischen Sektor, z.B. für Steckerleisten, Spulenkörper, komplizierte Gehäuse wie Projektrogehäuse, Schaltkastenunterböden usw. und für besonders komplizierte Formkörper, die aus Werkzeugen, in denen Bereiche mit stark unterschiedlichen Temperaturen vorliegen, entformt werden. Bei der Herstellung solcher Teile treten auch bei erhöhter Temperatur keine Entformungsschwierigkeiten auf.

Die Wirksamkeit der erfindungsgemäss zu verwendenden hydrierten Polybenzyle kann anhand der bei der Entformung von Spritzgussteilen benötigten Entformungskräfte gemessen werden. Diese werden in den folgenden Beispielen dadurch bestimmt, dass man den in dem Ölzylinder des Auswerfersystems bei der Entformung entstandenen Druck über ein optisches und gleichzeitig schreibendes Anzeigegerät sichtbar macht.

*Beispiele*

In den nachfolgenden Beispielen gelangen folgende aromatische Polyester zum Einsatz:

*Polyester A* (Iso-/Terephthalsäure 1:1 und Bisphenol-A) aus 9,12 kg Bisphenol-A, 4,14 kg Iso- und 4,14 kg Terephthalsäuredichlorid sowie 0,15 kg Phenol; relative Viskosität $\eta_{rel}$ = 1,258 (Ubbelohde-Viskosimeter, Lösung von 0,5 g Substanz in 100 ml Dichlormethanlösung, gemessen bei 25°C ); Kerbschlagzähigkeit $a_k$ = 20,2 kJ/m² (DIN 53 453); Wärmeformbeständigkeit Vicat B = 190°C (DIN 53 460, Verfahren B); Schmelzindex (MFI) = 36 g/10 min (DIN 53 735); Chlorbenzolrestgehalt = ca. 50 ppm.

*Polyester B* (Bisphenol-A und Iso-/Terephthalsäure 3:2) aus 9,12 kg Bisphenol-A, 4,968 kg Iso- und 3,312 kg Terephthalsäure sowie 0,152 kg Phenol; $\eta_{rel}$ = 1,261; $a_k$ = 19,7 kJ/m²; Vicat B = 190°C; MFI = 34 g/10 min; Chlorbenzolrestgehalt = ca. 50 ppm.

*Polyester C* (Bisphenol-A und Iso-/Terephthalsäuredichlorid 1:1; 30 Mol-% der Ester- durch Carbonatgruppen in statistischer Verteilung ersetzt) aus 2,736 kg Bisphenol-A, je 0,852 kg Iso- und Terephthalsäuredichlorid, 39,5 g Phenol und 0,6 kg Phosgen; $\eta_{rel}$ = 1,262; $a_k$ = 18,3 kJ/m²; Vicat B = 176°C; MFI = 38 g/10 min.

*Polyester D* (Bisphenol-A und Iso-/Terephthalsäuredichlorid 1:1, 10 Mol-% der Ester- durch Carbonatgruppen in Form von Blöcken ersetzt) aus 2,736 kg Bisphenol-A, je 1,096 kg Iso- und Terephthalsäuredichlorid, 67,86 g p-tert.-Butylphenol und 0,215 kg Phosgen; $\eta_{rel}$ = 1,253; $a_k$ = 16,9 kJ/m²; Vicat B = 182°C; MFI = 41 g/10 min.

*Hydriertes Polybenzyl E*

In eine gerührte vorgelegte Mischung aus 3 l getrockneten Dichlormethans und 60 ml $TiCl_4$ wurden bei 20 bis 25°C innerhalb 10 h 3 kg Benzylchlorid getropft. Unter heftiger HCl-Entwicklung färbte sich das Reaktionsgemisch dunkelbraun. 10 h nach Beendigung des Zutropfens wurde für ca. 10 h Stickstoff zur Entfernung des HCl-Gases durch das Reaktionsgemisch geleitet. Die Lösung färbte sich beim anschliessenden Ausschütteln mit Wasser gelb.

Sie wurde mit verdünnter wässeriger Natronlauge vom restlichen HCl befreit und mit Wasser salzfrei gewaschen. Beim Verdampfen des Lösungsmittels verblieb das Polybenzyl als ein gelbes sprödes Harz mit einem Schmelzbereich von 89 bis 94°C.

Es enthielt ca. 0,037 Gew.-% Chlor, besass ein mittleres Molekulargewicht $\overline{M}_n$ von 2555 und eine Uneinheitlichkeit von 2,77 (gelchromatografische Bestimmung mit THF als Lösungsmittel).

In einem Autoklaven wurde das erhaltene Polybenzyl bei 240°C und 250 bis 300 bar mit Raney-Nickel als Katalysator hydriert. Nach Verbrauch der zur vollständigen Sättigung berechneten Menge Wasserstoff war eine farblose Substanz vom Schmelzbereich 103 bis 108°C entstanden.

*Hydriertes Polybenzyl F*

Es wurde analog der obigen Polybenzylherstellung verfahren, wobei anstelle von $TiCl_4$ 45 g trockenes Aluminiumchlorid eingesetzt wurden. Das erhaltene Polybenzyl war ein gelbes sprödes Harz mit einem Schmelzbereich von 99 bis 104,5°C, einem Chlorgehalt von 0,073 Gew.-%, einem mittleren Molekulargewicht $\overline{M}_n$ von 5950 und einer Uneinheitlichkeit von 1,22.

Die Hydrierung erfolgte analog der Herstellung des hydrierten Polybenzyls E. Die Reaktion wurde nach Verbrauch von ca. 80% der zur vollständigen Sättigung erforderlichen Menge Wasserstoff abgebrochen. Das erhaltene Produkt war farblos und besass einen Schmelzbereich von 102 bis 106°C.

Die Einarbeitung der hydrierten Polybenzyle in die aromatischen Polyester erfolgte in einem Doppelwellenextruder mit einem Schneckendurchmesser von 32 mm bei ca. 310°C. Die jeweils verwandten Polyesterarten, die Mengen der Entformungsmittel und die Eigenschaften der Gemische sind in der folgenden Tabelle zusammengestellt.

Die relative Lösungsviskosität ($\eta_{rel}$) wurde mit einem Ubbelohde-Viskosimeter an einer Lösung von 0,5 g Polyester in 100 ml Dichlormethanlösung bei 23°C bestimmt.

Das Entformungsverhalten der Formmassen wurde an einem konischen Zylinder von 35 mm Länge, 40 bzw. 42 mm Aussendurchmesser und einer Wanddicke von 2 mm durch Messung des im Auswerfersystem entstehenden Druckes untersucht. Die Entformungsdrucke können ebenfalls der Tabelle entnommen werden.

*(Tabelle auf der nächsten Seite)*

## Patentansprüche

1. Verwendung von hydrierten Polybenzylen mit wiederkehrenden Einheiten der Formel formule

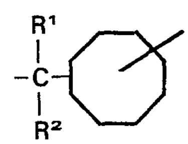

(I)

worin

$R^1$, $R^2$ ein Wasserstoffatom oder einen Alkylrest mit 1 bis 5 C-Atomen bedeuten,

als Entformungsmittel für aromatische Polyester.

| Beispiel | Art des Poly-esters | Entformungsmittel/ Art (%) | Kerbschlag-zähigkeit $a_k$ nach DIN 53 453 ($kJ/m^2$) | Wärmeform-beständig-keit nach Vicat, Meth. B (DIN 53 460) (°C) | $\eta_{rel}$ | Entformungs-druck bei 150°C (bar) |
|---|---|---|---|---|---|---|
| 1 | A | 0,1/E | 19,1 | 188 | 1,256 | 11 |
| 2 | B | 0,1/E | 18,6 | 187 | 1,258 | 10 |
| 3 | C | 0,1/F | 17,2 | 173 | 1,258 | 9 |
| 4 | D | 0,1/F | 15,8 | 179 | 1,250 | 11 |
| 5 | A | 0,2/E | 18,3 | 186 | 1,253 | 7 |
| 6 | B | 0,2/E | 18,1 | 186 | 1,254 | 6 |
| 7 | C | 0,2/F | 16,6 | 171 | 1,254 | 5,5 |
| 8 | D | 0,2/F | 15,3 | 177 | 1,248 | 7 |
| 9 | A | 0,2/Pentaerythrit-tetrastearat | 16,2 | 185 | 1,251 | 15 |
| 10 | C | 0,2/1,4-Cyclo-hexandioldistearat | 11,2 | 165 | 1,253 | 18 |
| Vergleich | A | — | — | — | — | 40 |
| | B | — | — | — | — | 38 |
| | C | — | — | — | — | 41 |
| | D | — | — | — | — | 40 |

2. Verwendung nach Anspruch 1, dadurch gekennzeichnet, dass die hydrierten Polybenzyle in Mengen von 0,01 bis 3 Gew.-%, bezogen auf aromatischen Polyester, verwendet werden.

3. Verwendung nach den Ansprüchen 1 und 2, dadurch gekennzeichnet, dass die hydrierten Polybenzyle in Mengen von 0,05 bis 1 Gew.-%, bezogen auf aromatischen Polyester, verwendet werden.

4. Verwendung nach den Ansprüchen 1 bis 3, dadurch gekennzeichnet, dass die hydrierten Polybenzyle ein als Zahlenmittel $\overline{M}_n$ bestimmtes Molekulargewicht von 300 bis 300000 besitzen.

5. Verwendung nach den Ansprüchen 1 bis 4, dadurch gekennzeichnet, dass die hydrierten Polybenzyle ein als Zahlenmittel $\overline{M}_n$ bestimmtes Molekulargewicht von 1000 bis 10000 besitzen.

6. Verwendung nach den Ansprüchen 1 bis 5, dadurch gekennzeichnet, dass die hydrierten Polybenzyle bis zu 30%, bezogen auf die Anzahl carbocyclischer Reste, aromatischer Ringe enthalten.

7. Verwendung nach den Ansprüchen 1 bis 6, dadurch gekennzeichnet, dass die aromatischen Polyester Reaktionsprodukte aus aromatischen Dihydroxiverbindungen und Iso- und/oder Terephthalsäure, Kettenabbrechern und gegebenenfalls Verzweigungsmitteln sind.

8. Verwendung nach den Ansprüchen 1 bis 7, dadurch gekennzeichnet, dass bis zu 50 Mol-% der Estergruppen des aromatischen Polyesters durch Carbonatgruppen ersetzt sind.

9. Verwendung nach den Ansprüchen 1 bis 8, dadurch gekennzeichnet, dass die aromatischen Polyester bis zu 10 Mol-%, bezogen auf die Summe von Carbonester-, Carbonat- und Anhydridgruppierungen, Säureanhydridgruppen enthalten.

**Claims**

1. Use of hydrogenated polybenzyls containing recurring units of the formula
formule

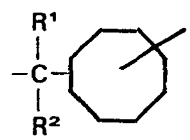

(I)

wherein
$R^1$ and $R^2$ denote a hydrogen atom or an alkyl radical having 1 to 5 C atoms,
as mould release agents for aromatic polyesters.

2. The use according to claim 1, characterised in that the hydrogenated polybenzyls are used in quantities of from 0.01 to 3% by weight, based on the aromatic polyester.

3. The use according to claims 1 and 2, characterised in that the hydrogenated polybenzyls are used in quantities of from 0.05 to 1% by weight, based on the aromatic polyester.

4. The use according to claims 1 to 3, characterised in that the hydrogenated polybenzyls have a molecular weight of from 300 to 300,000 determined as a number average $\overline{M}_n$.

5. The use according to claims 1 to 4, characterised in that the hydrogenated polybenzyls have a molecular weight of from 1,000 to 10,000 determined as a number average $\overline{M}_n$.

6. The use according to claims 1 to 5, characterised in that the hydrogenated polybenzyls contain up to 30% of aromatic rings, based on the number of carbocyclic radicals.

7. The use according to claims 1 to 6, characterised in that the aromatic polyesters are reaction products obtained from aromatic dihydroxy compounds and iso- and/or terephthalic acids, chain terminators and optionally branching agents.

8. The use according to claims 1 to 7, characterised in that up to 50 mol % of the ester groups of the aromatic polyester are replaced by carbonate groups.

9. The use according to claims 1 to 8, characterised in that the aromatic polyesters contain up to 10 mol % of acid anhydride groups, based on the total of carboxylic ester groups, carbonate groups and anhydride groups.

## Revendications

1. Utilisation de polybenzyles hydrogénés contenant des motifs répétés de formule

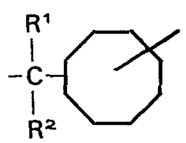

(I)

dans laquelle
$R^1$ et $R^2$ représentent un atome d'hydrogène ou un groupe alkyle en $C_1$-$C_5$,
en tant qu'agents de démoulage pour des polyesters aromatiques.

2. Utilisation selon la revendication 1, caractérisée en ce que l'on utilise les polybenzyles hydrogénés en quantité de 0,01 à 3% en poids, par rapport aux polyesters aromatiques.

3. Utilisation selon les revendications 1 et 2, caractérisée en ce que l'on utilise les polybenzyles hydrogénés en quantité de 0,05 à 1% en poids, par rapport aux polyesters aromatiques.

4. Utilisation selon les revendications 1 à 3, caractérisée en ce que les polybenzyles hydrogénés ont un poids moléculaire, déterminé en moyenne en nombre $\overline{M}_n$ de 300 à 300000.

5. Utilisation selon les revendications 1 à 4, caractérisée en ce que les polybenzyles hydrogénés ont un poids moléculaire, déterminé en moyenne en nombre $\overline{M}_n$ de 1000 à 10000.

6. Utilisation selon les revendications 1 à 5, caractérisée en ce que les polybenzyles hydrogénés contiennent jusqu'à 30%, par rapport au nombre des restes carbocycliques, de cycles aromatiques.

7. Utilisation selon les revendications 1 à 6, caractérisée en ce que les polyesters aromatiques sont des produits de réaction de composés aromatiques dihydroxylés et de l'acide iso- et/ou téréphtalique, de coupeurs de chaînes et, le cas échéant, d'agents ramifiants.

8. Utilisation selon les revendications 1 à 7, caractérisée en ce qu'une proportion allant jusqu'à 50 mol % des groupes ester du polyester aromatique a été remplacée par des groupes carbonate.

9. Utilisation selon les revendications 1 à 8, caractérisée en ce que les polyesters aromatiques contiennent jusqu'à 10 mol % de groupes anhydride, par rapport à la somme des groupes ester carboxylique, carbonate et anhydride.